# EUROPÄISCHE PATENTSCHRIFT

(11) **EP 3 191 824 B1**
(45) Veröffentlichungstag und Bekanntmachung des Hinweises auf die Patenterteilung: **05.01.2022**
(21) Anmeldenummer: 15770827.2
(22) Anmeldetag: 09.09.2015
(51) Int. Cl.: G01N 25/72

(54) **THERMOGRAPHISCHE UNTERSUCHUNGSEINRICHTUNG SOWIE VERFAHREN ZUR ZERSTÖRUNGSFREIEN UNTERSUCHUNG EINER OBERFLÄCHENNAHEN STRUKTUR AN EINEM PRÜFOBJEKT**
THERMOGRAPHIC EXAMINATION DEVICE AND METHOD FOR NONDESTRUCTIVELY EXAMINING A STRUCTURE NEAR THE SURFACE ON A TEST OBJECT
INSTALLATION D'INSPECTION THERMOGRAPHIQUE ET PROCÉDÉ D'INSPECTION NON DESTRUCTIVE D'UNE STRUCTURE PROCHE DE LA SURFACE SUR UN SPÉCIMEN D'ESSAI

(30) Priorität: 10.09.2014 DE 102014218136
(43) Veröffentlichungstag der Anmeldung: 19.07.2017
(73) Patentinhaber: Fraunhofer-Gesellschaft zur Förderung der angewandten Forschung e.V., 80686 München (DE)
(72) Erfinder: DOEGE, Jens, 01279 Dresden (DE)
(74) Vertreter: Zimmermann, Tankred Klaus
(86) Internationale Anmeldenummer: PCT/EP2015/070622
(87) Internationale Veröffentlichungsnummer: WO 2016/038096

(56) Entgegenhaltungen:
- US-A1- 2002 027 941
- US-A1- 2008 137 105
- CLEMENTE IBARRA-CASTANEDO ET AL: "Nondestructive testing with thermography", EUROPEAN JOURNAL OF PHYSICS, INSTITUTE OF PHYSICS PUBLISHING, BRISTOL, GB, Bd. 34, Nr. 6, 22. Oktober 2013 (2013-10-22), XP020252366, ISSN: 0143-0807, DOI: 10.1088/0143-0807/34/6/S91 [gefunden am 2013-10-22]
- B VERNEY ET AL: "Multimodal fusion system for NDT and Metrology", QIRT 2014, 11. Juli 2014 (2014-07-11), XP055230580,
- JOACHIM SCHLICHTING ET AL: "Defect sizing by local excitation thermography", QIRT JOURNAL - QUANTITATIVE INFRARED THERMOGRAPHY : AN INTERNATIONAL JOURNAL ON IR THERMOGRAPHY, Bd. 8, Nr. 1, 30. Juni 2011 (2011-06-30), Seiten 51-63, XP055229690, Cachan Cedex ISSN: 1768-6733, DOI: 10.3166/qirt.8.61-63
- None

## Beschreibung

Bei der Fertigung von Teilen, insbesondere mit geringen Wandstärken, ist es für die Stabilität und damit auch die Qualität wichtig, eine definierte Wandstärke einzuhalten. Insbesondere bei Verfahren mit technologisch bedingten größeren Streuungen, wie z.B. Lamination, Form- oder Schleuderguss ist es notwendig, den erzielten Wert durchgängig messtechnisch zu überprüfen, um oberflächennahe Fehler, wie z.B. Delaminationen (Laminationsprozess), Gaseinschlüssen (Formguss) oder zu geringen Wandstärken (Schleuderguss), erkennen zu können. Die Anforderungen an eine Messvorrichtung sind je nach Einsatzgebiet: kurze Messzeit zur Prozessintegration, geringe Belastung des zu prüfenden Objekts, beispielsweise durch Wärmeeintrag bei einer Bestrahlung, lange Standzeit sowie geringe Kosten.

Ein etabliertes Verfahren zur dreidimensionalen Erfassung des inneren Aufbaus von Objekten ist die Computertomographie, bei der das Messobjekt durch Röntgenstrahlung aus verschiedenen Richtungen durchstrahlt und aus den einzelnen Röntgenbildern ein 3D-Objekt rekonstruiert wird.

Es gibt Computertomographen unterschiedlicher Größe, Auflösung und Geschwindigkeiten. Wird eine hohe Messgeschwindigkeit gewünscht, sind der technische Aufwand und damit die Kosten derart hoch, dass dieses Messverfahren in vielen Fällen nicht wirtschaftlich eingesetzt werden kann.

Einen Ansatz zur Reduzierung der Kosten bieten thermographische Verfahren. Mittels thermographischer Verfahren (Thermography) ist es möglich, Prüfkörper nahe der Oberfläche und insbesondere Prüfkörper mit geringer Wandstärke zu untersuchen.

Bei einigen thermographischen Verfahren wird mittels einer flächig wirkenden Wärmequelle oder -senke die Oberfläche des Prüfkörpers kurzzeitig erhitzt bzw. gekühlt sowie der nachfolgende zeitliche Verlauf der Oberflächentemperatur mittels einer Wärmebildkamera aufgezeichnet und dann ausgewertet. Aus dem zeitlichen Verlauf der Oberflächentemperatur können dann unter Berücksichtigung der Materialparameter thermische Leitfähigkeit, spezifische Wärmekapazität und Dichte unter Verwendung der Wärmeleitungsgleichung geometrische Eigenschaften wie die Tiefe eines Gaseinschlusses oder die Dicke einer obersten Schicht abgeleitet werden. Wichtig sind dabei die ausreichende Ausdehnung des untersuchten Gebiets parallel zur Oberfläche sowie Unterschiede in den thermischen Eigenschaften der zu ermittelnden Strukturmerkmale. Beispiele für derartige thermographische Verfahren sind aus der Quelle [1] bekannt.

Weiterhin sind aus dem Stand der Technik Lösungen bekannt, bei denen eine lokale Erwärmung der Oberfläche z.B. mittels Laserpunkt erreicht wird und ein Thermographiesystem mit einem Punktdetektor optisch nachgeführt wird. Diese Lösung ermöglicht auch bei langsamen abtastenden Systemen auf der Basis von Punktdetektoren eine feste Zeitkonstante zwischen Beleuchtung und Wärmedetektion. Beispiele hierfür finden sich in den Quellen [2], [3], [4] und [5].

Aus der Quelle [6] ist ein vereinfachtes Verfahren bekannt, bei dem nicht der Zeitverlauf der Oberflächentemperatur sondern die Oberflächentemperatur zu einem bestimmten Zeitpunkt erfasst wird.

Eine allgemeine Übersicht über thermographische Verfahren liefert die Quelle [7].

Aus Quelle [8] sind ein Verfahren und eine Vorrichtung zur kontaktlosen Untersuchung von Oberflächen und inneren Strukturen eines festen Prüfkörpers bekannt. Dabei wird gegen den Prüfkörper ein Einzelimpuls eines elektromagnetischen Anregungsstrahls geworfen und die Wirkung der dabei örtlich und zeitlich induzierten Prüfkörpertemperatur gemessen.

Aufgabe der vorliegenden Erfindung ist es, eine verbesserte thermographische Untersuchungseinrichtung sowie ein verbessertes thermographisches Verfahren zur zerstörungsfreien Untersuchung einer oberflächennahen Struktur an einem Prüfobjekt zu schaffen.

Die Aufgabe wird gelöst durch eine thermographische Untersuchungseinrichtung zur zerstörungsfreien Untersuchung einer oberflächennahen Struktur an einem Prüfobjekt, entsprechend dem unabhängigen Anspruch 1.

Bei den aus den Quellen [1] bis [7] bekannten Lösungen wird eine Wärmemenge auf einen zu beheizenden Oberflächenbereich des Prüfkörpers aufgebracht und die Oberflächentemperatur eben dieses zu beheizenden Oberflächenbereich gemessen. Anhand der Wärmeausbreitung senkrecht zum Oberflächenbereich werden damit die thermischen Eigenschaften am zu beheizenden Oberflächenbereich oder die Differenzen der thermischen Eigenschaften an nacheinander vermessenen zu beheizenden Oberflächenbereichen des Prüfkörpers ermittelt, welche dann die Grundlage zur Ermittlung von Parametern einer oberflächennahen Struktur des Prüfkörpers bilden.

Demgegenüber ist es erfindungsgemäße vorgesehen, dass eine örtliche Temperaturverteilung ermittelt wird, wobei die Temperaturverteilung nicht nur für den zu beheizenden Oberflächenbereich sondern auch für einen zu dem zu beheizenden Oberflächenbereich benachbarten äußeren zu vermessenden Oberflächenbereich ermittelt wird. Der zu beheizenden Oberflächenbereich und der äußere zu vermessende Oberflächenbereich bilden dabei den gesamten zu vermessenden Oberflächenbereich.

Um eine aussagekräftige örtliche Temperaturverteilung zu ermitteln, ist es prinzipiell erforderlich, die jeweilige Temperatur an wenigstens zwei unterschiedlichen Messpunkten am zu vermessenden Oberflächenbereich zu erfassen. Im Interesse einer besseren und genaueren Auswertbarkeit kann jedoch eine wesentlich höhere Anzahl von unterschiedlichen Messpunkten vorgesehen sein. Beispielsweise können 10 bis 500 unterschiedlichen Messpunkten vorgesehen sein.

Dabei ist es wesentlich, wenigstens einen Messpunkt am zu beheizenden Oberflächenbereich und wenigstens einen weiteren Messpunkt am äußeren zu vermessenden Oberflächenbereich vorzusehen.

Erfindungsgemäß ist dabei vorgesehen die örtliche Temperaturverteilung mehrfach zu verschiedenen Zeitpunkten zu erfassen, umso einen Zeitverlauf der örtlichen Temperaturverteilung für den zu vermessenden Oberflächenbereich zu erfassen. Der zeitliche Verlauf der örtlichen Temperaturverteilung kann dann beispielsweise mit der Wärmetransportgleichung analysiert werden, wobei die Analyse dann dazu dient, wenigstens einen Parameter der oberflächennahen Struktur des Prüfobjekts zu ermitteln.

Während oder zu gewissen Zeitpunkten nach dem Wärmeeintrag kann das nähere Umfeld beispielsweise mittels einer Matrix-Wärmebildkamera vermessen werden. Dabei wird neben dem Ort des Wärmeeintrags auch der zeitliche Verlauf der oberflächlichen Wärmeausbreitung aufgezeichnet. Die lokale Temperaturerhöhung in den einzelnen Punkten der Umgebung um die Stelle des Wärmeeintrags kann durch eine geeignete Funktionen, z.B. die Lösung der Wärmeleitungsgleichung, gefittet werden. Somit kann auch bei sehr fehlerbehafteten bzw. verrauschten Bildern und Thermographie-Videosequenzen, oder bei Messobjekten, die sich nicht in einem thermisch ausgeglichenen Zustand, z.B. aufgrund von Erwärmung oder Abkühlung befinden, auf die thermischen Eigenschaften geschlossen werden. Durch Einbeziehung des relativen Verhaltens in Bezug auf die nicht durch den Wärmeeintrag direkt erhitzte Umgebung können die Ergebnisse verbessert werden.

Aus diesen Verteilungen kann auf die Ausbreitung der Wärme und damit auf die Tiefe des zusammenhängenden Bereichs konstanter thermischer Materialparameter rückgeschlossen werden.

Durch die Ermittlung des Zeitverlaufs der örtlichen Temperaturverteilung in einem Bereich, der größer als der zu beheizende Bereich ist, können, anders als bei vorbekannten Lösungen, bei denen lediglich der Zeitverlauf der Temperatur am zu beheizenden Bereich ermittelt wird, überlagerte unabhängige äußere Effekte, wie z. B. Änderungen der Umgebungstemperatur, oder überlagerte unabhängige innere Effekte, wie z. B. Unzulänglichkeiten des Messsystems aufgrund von Rauschen oder aufgrund von fehlerhafter Kalibrierung kompensiert werden. Hierdurch können die interessierenden Parameter der oberflächennahen Struktur des Prüfkörpers genauer erfasst werden als das bisher möglich war.

Vor allem bei sehr geringen Temperaturänderungen in der Größenordnung der Auflösung der thermischen Sensoreinrichtung wirkt sich Rauschen erheblich auf die Messgenauigkeit des Systems aus. Gemäß dem Stand der Technik wird versucht diesem Problem durch bessere und damit kostenintensivere Messtechnik oder durch erhöhten Wärmeeintrag, also durch eine höhere Ausgangstemperatur der zu beheizenden Oberfläche zu begegnen. Für eine Vielzahl von Anwendungen, z.B. in der Lebensmittelindustrie, ist jedoch eine Beschränkung des Wärmeeintrags zum Erhalt der Kühlkette erforderlich. Da bei der erfindungsgemäßen Lösung Rauschen besser kompensiert werden kann als im Stand der Technik, kann auch die eingetragene Wärmemenge im Vergleich zum Stand der Technik verringert werden, so dass sich der Anwendungsbereich der Untersuchungseinrichtung vergrößert.

Gemäß einer vorteilhaften Weiterbildung der Erfindung ist der Parameter eine Dicke einer Wandung des Prüfobjekts. In der Praxis ist es in vielen Fällen wünschenswert, die Dicke einer Wandung eines Prüfobjekts zerstörungsfrei feststellen zu können. Dies gilt insbesondere bei Hohlkörpern aller Art, beispielsweise bei technischen Hohlkörpern wie Behältnissen oder Leitungen oder bei als Nahrungsmittel vorgesehenen Hohlkörpern wie etwa bei Schokoladenhohlkörpern.

Nach einer vorteilhaften Weiterbildung der Erfindung ist der Parameter eine Dichte einer Wandung des Prüfobjekts. Weiterhin ist es in der Praxis häufigen wünschenswert, eine Dichte einer Wandung des Prüfobjekts zerstörungsfrei feststellen zu können. Dies gilt gerade bei Gusskörpern bei denen eine veränderte Dichte auf Einschluss von Fremdmaterial hinweist. Insbesondere können so Lufteinschlüsse im Gusskörper festgestellt werden.

Gemäß einer zweckmäßigen Weiterbildung der Erfindung ist der zu beheizende Oberflächenbereich punktförmig, linienförmig in Form einer offenen Kurve, linienförmig in Form einer geschlossenen Kurve, kreisförmig oder elliptisch ausgebildet. Der Eintrag der Wärmemenge kann dabei sehr konzentriert bzw. fokussiert erfolgen, so dass die Wärmemenge klein gehalten werden kann. Versuche haben dabei ergeben, dass es zu besonders genauen Ergebnissen führt, wenn der zu beheizende Oberflächenbereich die Form einer linienförmigen geschlossenen Kurve aufweist. In diesem Fall ist es nämlich möglich, die sich an der Oberfläche ergebende örtliche Temperaturverteilung sowohl innerhalb des von der Kurve umschlossenen Bereichs als auch außerhalb davon auszuwerten.

Gemäß einer vorteilhaften Weiterbildung der Erfindung weist der zu beheizenden Oberflächenbereich wenigstens zwei beanstandete zu beheizenden Teiloberflächenbereiche auf, welche Teil desselben zu vermessenden Oberflächenbereichs sind. Hierbei kann sowohl der zwischen den zu beheizenden Teiloberflächenbereichen liegende Teil der Oberfläche als auch der nicht zwischen den zu beheizenden Teiloberflächenbereichen liegende Teil der Oberfläche hinsichtlich der örtlichen Temperaturverteilung untersucht werden, was die Genauigkeit der Messung weiter verbessern kann.

Nach einer vorteilhaften Weiterbildung der Erfindung ist die Erwärmungseinrichtung zum Aufbringen von Wärmeenergie auf denen zu beheizenden Oberflächenbereich mittels elektromagnetischer Wellen ausgebildet. Bei den elektromagnetischen Wellen kann es sich beispielsweise Mikrowellen, Lichtwellen oder Laserlichtwellen handeln. Besonders vorteilhaft ist hierbei, dass die Erwärmungseinrichtung beanstandet von dem Prüfkörper angeordnet werden kann, so dass die Erwärmungseinrichtung den Erfassungsbereich der thermischen Sensoreinrichtung nicht beeinträchtigt.

Gemäß einer zweckmäßigen Weiterbildung der Erfindung ist die Erwärmungseinrichtung zum Aufbringen von Wärmeenergie auf den zu beheizenden Oberflächenbereich mittels mechanischer Anregung ausgebildet. Die mechanische Anregung kann berühren oder berührungslos beispielsweise durch Ultraschall erfolgen.

Nach einer vorteilhaften Weiterbildung der Erfindung ist die Erwärmungseinrichtung zum Aufbringen von Wärmeenergie auf den zu beheizenden Oberflächenbereich mittels Wärmeleitung ausgebildet. Hierdurch kann unser konzentrierter Wärmeeintrag erreicht werden, so dass die Wärmemenge besonders gering ausfallen kann.

Nach einer zweckmäßigen Weiterbildung der Erfindung ist die Erwärmungseinrichtung zum Aufbringen von Wärmeenergie auf den zu beheizenden Oberflächenbereich mittels Erzeugung eines elektrischen Stroms an dem zu beheizenden Oberflächenbereich ausgebildet. Hierdurch kann die Wärmeenergie praktisch verlustfrei auf den zu beheizenden Oberflächenbereich aufgebracht werden.

Gemäß einer vorteilhaften Weiterbildung der Erfindung weist die thermische Sensoreinrichtung einen eindimensionalen Sensor, beispielsweise einen digitalen Zeilensensor, auf. Beispielsweise kann es sich um einen CCD-Zeilensensor, einen CMOS-Zeilensensor oder um einen analogen Zeilensensor handeln. Derartige Zeilensensoren sind kostengünstig verfügbar und eignen sich besonders dann, wenn die örtliche Temperaturverteilung eindimensional, also linienförmig, ermittelt werden soll. Grundsätzlich ist es aber mittels Zeilensensoren auch möglich durch mehrere Linien förmigen Aufnahmen ein zweidimensionales Wärmebild zu erzeugen.

Gemäß einer zweckmäßigen Weiterbildung der Erfindung weist die thermische Sensoreinrichtung einen zweidimensionalen Sensor, beispielsweise einen digitalen Bildsensor, auf. Dabei kann es sich beispielsweise um einen CCD-Matrixsensor, einen CMOS-Matrixsensor oder um einen analogen Matrixsensor handeln. Auch derartige Sensoren stehen kostengünstig zur Verfügung, erlauben jedoch die Aufnahme eines zweidimensionalen Wärmebildes in nur einer Aufnahme.

Gemäß einer besonders vorteilhaften Weiterbildung der Erfindung ist die Erwärmungseinrichtung zum gleichzeitigen oder zeitlich überlappenden Aufbringen von Wärmeenergie auf mehrere zu beheizende Oberflächenbereiche ausgebildet, wobei die thermische Sensoreinrichtung jeweils zur gleichzeitigen oder zeitlich überlappenden Erfassung der dem Aufbringen von Wärmeenergie nachfolgenden Zeitverläufe der örtlichen Temperaturverteilungen auf mehreren zu vermessenden Oberflächenbereichen des Prüfobjekts ausgebildet ist, wobei die zu vermessenden Oberflächenbereiche jeweils einen der zu beheizenden Oberflächenbereiche sowie einen dem jeweiligen zu beheizenden Oberflächenbereich benachbarten äußeren Oberflächenbereich umfassen; und wobei die Auswerteeinrichtung zur gleichzeitigen oder zeitlich überlappenden Auswertung der Zeitverläufe der örtlichen Temperaturverteilungen ausgebildet ist, um so wenigstens einen Parameter der oberflächennahen Struktur an mehreren zu vermessenden Oberflächenbereichen gleichzeitig oder zeitlich überlappend zu erfassen.

Unter "gleichzeitig" wird hierbei verstanden, dass die jeweiligen Ereignisse zum gleichen Zeitpunkt beginnen und zum gleichen Zeitpunkt enden. Weiterhin wird unter "zeitlich überlappend" verstanden, dass der Beginn eines späteren Ereignisses zwischen dem Beginn und dem Ende des früheren Ereignisses liegt.

Im Rahmen dieser Weiterbildung der Erfindung ist es möglich eine Vielzahl von Oberflächenbereichen in kurzer Zeit zu untersuchen.

Falls die Erwärmungseinrichtung zur Aussendung von elektromagnetischen Wellen ausgebildet ist, kann die Erwärmungseinrichtung eine Optik aufweisen, welche die erzeugten elektromagnetischen Wellen auf mehrere zu beheizenden Oberflächenbereich fokussiert.

Gemäß einer vorteilhaften Weiterbildung der Erfindung ist die Auswerteeinrichtung zur Berücksichtigung eines örtlichen Verlaufs einer Neigung des zu vermessenden Oberflächenbereichs in Bezug auf eine optische Achse der thermischen Sensoreinrichtung bei der Auswertung des Zeitverlaufs der örtlichen Temperaturverteilung ausgebildet.

Für eine genaue Auswertung des Wärmestroms im Prüfobjekt ist es erforderlich, die Temperaturverteilung längs der Oberfläche zu ermitteln. Aufgrund von perspektivischen Verzerrungen, beispielsweise bedingt durch die optischen Eigenschaften der thermischen Sensoreinrichtung, ist es aber nicht möglich, die Temperaturverteilung unmittelbar längs der Oberfläche zu ermitteln. Dies gilt insbesondere wenn die Blickrichtung, also die optische Achse, der thermischen Sensoreinrichtung nicht senkrecht auf den jeweiligen Messpunkt fällt, was insbesondere bei einer ebenen Oberfläche des Prüfobjekts, welche gegenüber einer zur optischen Achse senkrecht angeordneten Ebene geneigt ist oder bei einer gekrümmten Oberfläche des Prüfobjekts, welche ja zumindest bereichsweise gegenüber einer zur optischen Achse senkrecht angeordneten Ebene geneigt ist, der Fall ist.

Weiterhin ergibt sich bei geneigten und insbesondere bei gekrümmten Oberflächen das Problem, dass Größe und Form des zu beheizenden Oberflächenbereichs von der Neigung bzw. der Krümmung der Oberflächen abhängen können, so dass auch die flächenspezifische Wärmemenge variiert.

Durch die Berücksichtigung des örtlichen Verlaufs der Neigung des zu vermessenden Oberflächenbereichs in Bezug auf die optische Achse der thermischen Sensoreinrichtung können Fehler aufgrund einer perspektivischen Verzerrung ebenso wie Fehler aufgrund einer Variation der flächenspezifischen Wärmemenge kompensiert werden.

Gemäß der Erfindung ist die Erwärmungsvorrichtung so ausgebildet, dass das Aufbringen von Wärmeenergie auf den zu beheizenden Oberflächenbereich des Prüfobjekts in Abhängigkeit von dem örtlichen Verlauf der Neigung erfolgt.

Hierdurch ist es möglich, den Eintrag der Wärmemenge in Abhängigkeit von dem örtlichen Verlauf der Neigung zu steuern oder zu regeln. So kann beispielsweise die Leistung der Erwärmungsvorrichtung oder die Wirkdauer der Erwärmungsvorrichtung gesteuert oder geregelt werden. Hierdurch können sowohl eine lokale Überhitzung des Prüfobjekts, wenn der zu beheizenden Oberflächenbereich nahezu senkrecht zur Wärmeeinfallsrichtung steht, als auch eine unauswertbar kleine Erhitzung des Prüfobjekts, wenn der zu beheizenden Oberflächenbereich nahezu parallel zur Wärmeeinfallsrichtung steht, vermieden werden.

Gemäß einer vorteilhaften Weiterbildung der Erfindung weist die thermographische Untersuchungseinrichtung eine Neigungserfassungseinrichtung zur Erfassung des örtlichen Verlaufs der Neigung auf. Beispielsweise kann die Neigungserfassungseinrichtung eine Laserlichtschnitt-Kamera umfassen. Mittels der optischen Laserlichtschnitt-Kamera kann durch Triangulation anhand eines bekannten Strahlengangs der Erwärmungseinrichtung die Position des Auftreffpunktes auf dem Prüfobjekt sowie die Krümmung und die Orientierung der Oberfläche in einfacher Weise ermittelt werden
Dazu kann die Position des zu beheizenden Oberflächenbereich verwendet werden, um dessen genaue Lokalisierung im örtlichen Verlauf der Neigung zu ermöglichen und, falls erforderlich, zur Erhöhung der flächigen Abdeckung und damit Auflösung eine zusätzliche Linie mit dem zur Erwärmung verwendeten oder einem separaten Laser abgebildet werden. Anders ausgedrückt, kann der örtliche Verlauf der Neigung zunächst separat vom Erwärmungsprozess mit hoher Auflösung erfasst werden, wobei dann der zu beheizenden Oberflächenbereich als Referenz dafür dienen kann, um den örtlichen Verlauf der Neigung und die örtliche Temperaturverteilung zur Deckung zu bringen.

Auf diese Weise können auch Prüfobjekte untersucht werden, welche eine komplexe äußere Form aufweisen, ohne dass diese explizit bekannt ist. Gemäß einer vorteilhaften Weiterbildung der Erfindung umfasst die thermographische Untersuchungseinrichtung eine Gussform zur Herstellung eines Kalibrierkörpers, insbesondere eines keilförmigen Kalibrierkörpers. Der Wärmeeintrag mittels Bestrahlung ist von spektralen und örtlichen Verteilung der Leistung und der von der Quelle bestrahlten Fläche sowie dem Reflexions- bzw. Absorptionskoeffizienten der Oberfläche abhängig. Aufgrund der Vielzahl Einflussfaktoren und deren z.T. veränderlichen oder nicht einfach feststellbaren Größe ist es erforderlich, vor der Untersuchung der oberflächennahen Struktur eine Kalibrierung der Anordnung vorteilhaft. Dazu kann ein Kalibrierkörper verwendet werden, der eine Keilform mit bekannten Dicken zwischen dem unteren und oberen festzustellenden Wert aufweist und aus dem gleichen Material wie das Messobjekt gefertigt wurde ist. Die vorgesehene Gussform ermöglicht es, mit dem jeweiligen Prüfobjekt korrespondierende Kalibrierkörper in einfacher Weise herzustellen.

In einem weiteren Aspekt wird die Aufgabe gelöst durch ein Verfahren zur zerstörungsfreien Untersuchung einer oberflächennahen Struktur an einem Prüfobjekt, entsprechend dem unabhängigen Anspruch 16.

Es ergeben sich die im Zusammenhang mit der erfindungsgemäßen thermographischen Untersuchungseinrichtung erläuterten Vorteile. Es versteht sich von selbst, dass das erfindungsgemäße Verfahren weitere Verfahrensschritte umfassen kann, welche im Zusammenhang mit der erfindungsgemäßen thermographischen Untersuchungseinrichtung beschrieben sind.

Im Folgenden werden die vorliegende Erfindung und deren Vorteile anhand von Figuren näher beschrieben. Es zeigen:
- Fig. 1: eine schematische Aufsicht eines ersten Ausführungsbeispiels einer erfindungsgemäßen thermographischen Untersuchungseinrichtung sowie eine zugehörige schematische Vorderansicht eines Prüfobjekts in einer vergrößerten Darstellung;
- Fig. 2: ein beispielhaftes Wärmebild eines Prüfobjekts sowie einen vergrößerten beispielhaften Zeitverlauf einer örtlichen Temperaturverteilung in Form von zeitlich gestaffelt aufgenommenen Wärmebildern im Bereich eines zu vermessenden Oberflächenbereichs an dem Prüfobjekts;
- Fig. 3: den beispielhaften Zeitverlauf der örtlichen Temperaturverteilung in Form von zeitlich gestaffelten Ort-Temperatur-Kurven;
- Fig. 4: eine beispielhafte Temperaturverteilung in einer geschnittenen Aufsicht auf ein Prüfobjekt mit einer großen Dicke der Wandung sowie eine beispielhafte Temperaturverteilung in einer geschnittenen Aufsicht auf ein Prüfobjekt mit einer geringeren Dicke der Wandung;
- Fig. 5: eine schematische Aufsicht eines zweiten Ausführungsbeispiels einer erfindungsgemäßen thermographischen Untersuchungseinrichtung sowie eine zugehörige schematische Vorderansicht eines Prüfobjekts in einer vergrößerten Darstellung;
- Fig. 6: eine schematische Aufsicht eines dritten Ausführungsbeispiels einer erfindungsgemäßen thermographischen Untersuchungseinrichtung sowie eine zugehörige schematische Vorderansicht eines Prüfobjekts in einer vergrößerten Darstellung; und
- Fig. 7: eine schematische dreidimensionale Darstellung einer Gussform zur Herstellung eines Kalibrierkörpers sowie eine schematische dreidimensionale Darstellung eines mit der Gussform hergestellten Kalibrierkörper.

Gleiche oder gleichartige Elemente oder Elemente mit gleicher oder äquivalenter Funktion sind im Folgenden mit gleichen oder gleichartigen Bezugszeichen versehen.

In der folgenden Beschreibung werden Ausführungsbeispiele mit einer Vielzahl von Merkmalen der vorliegenden Erfindung näher beschrieben, um ein besseres Verständnis der Erfindung zu vermitteln.

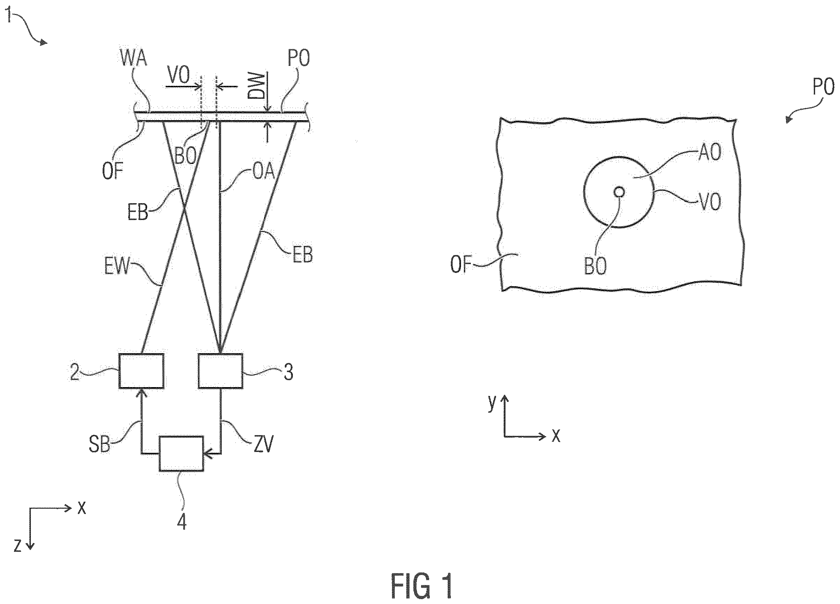

Fig. 1 zeigt eine schematische Aufsicht eines ersten Ausführungsbeispiels einer erfindungsgemäßen thermographischen Untersuchungseinrichtung 1 sowie eine zugehörige schematische Vorderansicht eines Prüfobjekts PO in einer vergrößerten Darstellung.

Die thermographische Untersuchungseinrichtung 1 umfasst:
eine Erwärmungsvorrichtung 2 zum Aufbringen von Wärmeenergie auf einen zu beheizenden Oberflächenbereich BO des Prüfobjekts PO;
eine thermische Sensoreinrichtung 3 zur Erfassung eines dem Aufbringen von Wärmeenergie nachfolgenden Zeitverlaufs einer örtlichen Temperaturverteilung auf einem zu vermessenden Oberflächenbereich VO des Prüfobjekts PO, wobei der zu vermessende Oberflächenbereich VO den zu beheizenden Oberflächenbereich BO sowie einen dem zu beheizenden Oberflächenbereich BO benachbarten äußeren zu vermessenden Oberflächenbereich AO umfasst; und
eine Auswerteeinrichtung 4 zur Auswertung des Zeitverlaufs der örtlichen Temperaturverteilung, um so wenigstens einen Parameter DW der oberflächennahen Struktur am zu vermessenden Oberflächenbereich VO zu erfassen.

Bei den aus den Quellen [1] bis [7] bekannten Lösungen wird eine Wärmemenge auf einen zu beheizenden Oberflächenbereich des Prüfkörpers aufgebracht und die Oberflächentemperatur eben dieses zu beheizenden Oberflächenbereich gemessen. Anhand der Wärmeausbreitung senkrecht zum Oberflächenbereich werden damit die thermischen Eigenschaften am zu beheizenden Oberflächenbereich oder die Differenzen der thermischen Eigenschaften an nacheinander vermessenen zu beheizenden Oberflächenbereichen des Prüfkörpers ermittelt, welche dann die Grundlage zur Ermittlung von Parametern einer oberflächennahen Struktur des Prüfkörpers bilden.

Demgegenüber ist es erfindungsgemäße vorgesehen, dass eine örtliche Temperaturverteilung ermittelt wird, wobei die Temperaturverteilung nicht nur für den zu beheizenden Oberflächenbereich BO sondern auch für einen zu dem zu beheizenden Oberflächenbereich BO benachbarten äußeren zu vermessenden Oberflächenbereich AO ermittelt wird. Der zu beheizenden Oberflächenbereich BO und der äußere zu vermessende Oberflächenbereich AO bilden dabei den gesamten zu vermessenden Oberflächenbereich VO.

Um eine aussagekräftige örtliche Temperaturverteilung zu ermitteln, ist es prinzipiell erforderlich, die jeweilige Temperatur an wenigstens zwei unterschiedlichen Messpunkten am zu vermessenden Oberflächenbereich VO zu erfassen. Im Interesse einer besseren und genaueren Auswertbarkeit kann jedoch eine wesentlich höhere Anzahl von unterschiedlichen Messpunkten vorgesehen sein. Beispielsweise können 10 bis 500 unterschiedlichen Messpunkten vorgesehen sein.

Dabei ist es wesentlich, wenigstens einen Messpunkt am zu beheizenden Oberflächenbereich BO und wenigstens einen weiteren Messpunkt am äußeren zu vermessenden Oberflächenbereich AO vorzusehen.

Erfindungsgemäß ist dabei vorgesehen die örtliche Temperaturverteilung mehrfach zu verschiedenen Zeitpunkten zu erfassen, umso einen Zeitverlauf der örtlichen Temperaturverteilung für den zu vermessenden Oberflächenbereich VO zu erfassen. Der zeitliche Verlauf der örtlichen Temperaturverteilung kann dann beispielsweise mit der Wärmegleichung analysiert werden, wobei die Analyse dann dazu dient, wenigstens einen Parameter DW der oberflächennahen Struktur des Prüfobjekts PO zu ermitteln.

Während oder zu gewissen Zeitpunkten nach dem Wärmeeintrag kann das nähere Umfeld VO beispielsweise mittels einer Matrix-Wärmebildkamera 3 vermessen werden. Die Matrix Wärme Bild Kamera 3 weist dabei eine mittig in dem Erfassungsbereich EB gelegene optische Achse OA auf. Dabei wird neben dem Ort BO des Wärmeeintrags auch der zeitliche Verlauf der oberflächlichen Wärmeausbreitung im zu vermessenden Oberflächenbereich VO aufgezeichnet. Die lokale Temperaturerhöhung in den einzelnen Punkten der Umgebung um die Stelle des Wärmeeintrags kann durch eine geeignete Funktionen, z.B. die Lösung der Wärmeleitungsgleichung, gefittet werden. Somit kann auch bei sehr fehlerbehafteten bzw. verrauschten Bildern und Thermographie-Videosequenzen, oder bei Messobjekten, die sich nicht in einem thermisch ausgeglichenen Zustand, z.B. aufgrund von Erwärmung oder Abkühlung befinden, auf die thermischen Eigenschaften geschlossen werden. Durch Einbeziehung des relativen Verhaltens in Bezug auf die nicht durch den Wärmeeintrag direkt erhitzte Umgebung AO können die Ergebnisse verbessert werden.

Aus diesen Verteilungen kann auf die zweidimensionale Ausbreitung der Wärme und damit auf die Tiefe DW des zusammenhängenden Bereichs konstanter thermischer Materialparameter rückgeschlossen werden.

Durch die Ermittlung des Zeitverlaufs der örtlichen Temperaturverteilung in einem Bereich VO, der größer als der zu beheizende Bereich OB ist, können, anders als bei vorbekannten Lösungen, bei denen lediglich der Zeitverlauf der Temperatur am zu beheizenden Bereich ermittelt wird, überlagerte unabhängige äußere Effekte, wie z. B. Änderungen der Umgebungstemperatur, oder überlagerte unabhängige innere Effekte, wie z. B. Unzulänglichkeiten des Messsystems 3 aufgrund von Rauschen oder aufgrund von fehlerhafter Kalibrierung kompensiert werden. Hierdurch können die interessierenden Parameter DW der oberflächennahen Struktur des Prüfkörpers PO genauer erfasst werden als das bisher möglich war.

Vor allem bei sehr geringen Temperaturänderungen in der Größenordnung der Auflösung der thermischen Sensoreinrichtung 3 wirkt sich Rauschen erheblich auf die Messgenauigkeit des Systems 1 aus. Gemäß dem Stand der Technik wird versucht diesem Problem durch bessere und damit kostenintensivere Messtechnik oder durch erhöhten Wärmeeintrag, also durch eine höhere Ausgangstemperatur der zu beheizenden Oberfläche zu begegnen. Für eine Vielzahl von Anwendungen, z.B. in der Lebensmittelindustrie, ist jedoch eine Beschränkung des Wärmeeintrags zum Erhalt der Kühlkette erforderlich. Da beider erfindungsgemäßen Lösung Rauschen besser kompensiert werden kann als im Stand der Technik, kann auch die eingetragene Wärmemenge im Vergleich zum Stand der Technik verringert werden, so dass sich der Anwendungsbereich der Untersuchungseinrichtung 1 vergrößert.

Im Interesse einer kompakten Anordnung und der Möglichkeit zur einfachen Ausrichtung der Erwärmungseinrichtung 2 in Bezug auf die thermischer Sensoreinrichtung 3 könnte im Strahlengang der Erwärmungseinrichtung 2 ein Spiegel vorgesehen sein.

Gemäß einer vorteilhaften Weiterbildung der Erfindung ist der Parameter DW eine Dicke DW einer Wandung WA des Prüfobjekts PO. In der Praxis ist es in vielen Fällen wünschenswert, die Dicke DW einer Wandung WA eines Prüfobjekts PO zerstörungsfrei feststellen zu können. Dies gilt insbesondere bei Hohlkörpern PO aller Art, beispielsweise bei technischen Hohlkörpern wie Behältnissen oder Leitungen oder bei als Nahrungsmittel vorgesehenen Hohlkörpern wie etwa bei Schokoladenhohlkörpern PO.

Nach einer vorteilhaften Weiterbildung der Erfindung ist der Parameter DW eine Dichte einer Wandung des Prüfobjekts PO. Weiterhin ist es in der Praxis häufigen wünschenswert, eine Dichte einer Wandung WA des Prüfobjekts PO zerstörungsfrei feststellen zu können. Dies gilt gerade bei Gusskörpern PO bei denen eine veränderte Dichte auf Einschluss von Fremdmaterial hinweist. Insbesondere können so Lufteinschlüsse im Gusskörper PO festgestellt werden.

Gemäß einer zweckmäßigen Weiterbildung der Erfindung ist der zu beheizenden Oberflächenbereich BO punktförmig, linienförmig in Form einer offenen Kurve, linienförmig in Form einer geschlossenen Kurve, kreisförmig oder elliptisch ausgebildet. Der Eintrag der Wärmemenge kann dabei sehr konzentriert bzw. fokussiert erfolgen, so dass die Wärmemenge klein gehalten werden kann. Versuche haben dabei ergeben, dass es zu besonders genauen Ergebnissen führt, wenn der zu beheizende Oberflächenbereich BO die Form einer linienförmigen geschlossenen Kurve aufweist. In diesem Fall ist es nämlich möglich, die sich an der Oberfläche OF ergebende örtliche Temperaturverteilung OTV sowohl innerhalb des von der Kurve OB umschlossenen Bereichs als auch außerhalb davon auszuwerten.

Gemäß einer vorteilhaften Weiterbildung der Erfindung weist der zu beheizenden Oberflächenbereich BO wenigstens zwei beanstandete zu beheizenden Teiloberflächenbereiche auf, welche Teil desselben zu vermessenden Oberflächenbereichs VO sind. Hierbei kann sowohl der zwischen den zu beheizenden Teiloberflächenbereichen liegende Teil der Oberfläche OF als auch der nicht zwischen den zu beheizenden Teiloberflächenbereichen liegende Teil der Oberfläche OF hinsichtlich der örtlichen Temperaturverteilung OTV untersucht werden, was die Genauigkeit der Messung weiter verbessern kann.

Nach einer vorteilhaften Weiterbildung der Erfindung ist die Erwärmungseinrichtung 3 zum Aufbringen von Wärmeenergie auf denen zu beheizenden Oberflächenbereich OB mittels elektromagnetischer Wellen EW ausgebildet. Bei den elektromagnetischen Wellen EW kann es sich beispielsweise Mikrowellen, Lichtwellen oder Laserlichtwellen handeln. Besonders vorteilhaft ist hierbei, dass die Erwärmungseinrichtung 2 beanstandet von dem Prüfkörper PO angeordnet werden kann, so dass die Erwärmungseinrichtung 2 den Erfassungsbereich EB der thermischen Sensoreinrichtung 3 nicht beeinträchtigt.

Gemäß einer nicht gezeigten zweckmäßigen Weiterbildung der Erfindung ist die Erwärmungseinrichtung 2 zum Aufbringen von Wärmeenergie auf den zu beheizenden Oberflächenbereich OB mittels mechanischer Anregung ausgebildet. Die mechanische Anregung kann berühren oder berührungslos beispielsweise durch Ultraschall erfolgen.

Nach einer nicht gezeigten vorteilhaften Weiterbildung der Erfindung ist die Erwärmungseinrichtung 2 zum Aufbringen von Wärmeenergie auf den zu beheizenden Oberflächenbereich OB mittels Wärmeleitung ausgebildet. Hierdurch kann unser konzentrierter Wärmeeintrag erreicht werden, so dass die Wärmemenge besonders gering ausfallen kann.

Nach einer nicht gezeigten zweckmäßigen Weiterbildung der Erfindung ist die Erwärmungseinrichtung 2 zum Aufbringen von Wärmeenergie auf den zu beheizenden Oberflächenbereich OB mittels Erzeugung eines elektrischen Stroms an dem zu beheizenden Oberflächenbereich OB ausgebildet. Hierdurch kann die Wärmeenergie praktisch verlustfrei auf den zu beheizenden Oberflächenbereich aufgebracht werden.

Gemäß einer nicht gezeigten vorteilhaften Weiterbildung der Erfindung weist die thermische Sensoreinrichtung 3 einen eindimensionalen Sensor, beispielsweise einen digitalen Zeilensensor, auf. Beispielsweise kann es sich um einen CCD-Zeilensensor, einen CMOS-Zeilensensor oder um einen analogen Zeilensensor handeln. Derartige Zeilensensoren sind kostengünstig verfügbar und eignen sich besonders dann, wenn die örtliche Temperaturverteilung eindimensional, also linienförmig, ermittelt werden soll. Grundsätzlich ist es aber mittels Zeilensensoren auch möglich durch mehrere Linien förmigen Aufnahmen ein zweidimensionales Wärmebild zu erzeugen.

Gemäß einer zweckmäßigen Weiterbildung der Erfindung weist die thermische Sensoreinrichtung 3 einen zweidimensionalen Sensor, beispielsweise einen digitalen Bildsensor, auf. Dabei kann es sich beispielsweise um einen CCD-Matrixsensor, einen CMOS-Matrixsensor oder um einen analogen Matrixsensor handeln. Auch derartige Sensoren stehen kostengünstig zur Verfügung, erlauben jedoch die Aufnahme eines zweidimensionalen Wärmebildes in nur einer Aufnahme.

In einem weiteren Aspekt umfasste Erfindung ein Verfahren zur zerstörungsfreien Untersuchung einer oberflächennahen Struktur an einem Prüfobjekt PO, welches folgende Schritte umfasst:
Aufbringen von Wärmeenergie auf einen zu beheizenden Oberflächenbereich BO des Prüfobjekts PO mittels einer Erwärmungseinrichtung 2;
Erfassung eines dem Aufbringen von Wärmeenergie nachfolgenden Zeitverlaufs ZV einer örtlichen Temperaturverteilung OTV auf einem zu vermessenden Oberflächenbereich VO des Prüfobjekts PO mittels einer thermischen Sensoreinrichtung 3, wobei der zu vermessende Oberflächenbereich VO den zu beheizenden Oberflächenbereich BO sowie einen dem zu beheizenden Oberflächenbereich BO benachbarten äußeren Oberflächenbereich AO umfasst; und
Auswertung des Zeitverlaufs ZV der örtlichen Temperaturverteilung OTV mittels einer Auswerteeinrichtung 4, um so wenigstens einen Parameter DW der oberflächennahen Struktur am zu vermessenden Oberflächenbereich VO zu erfassen.

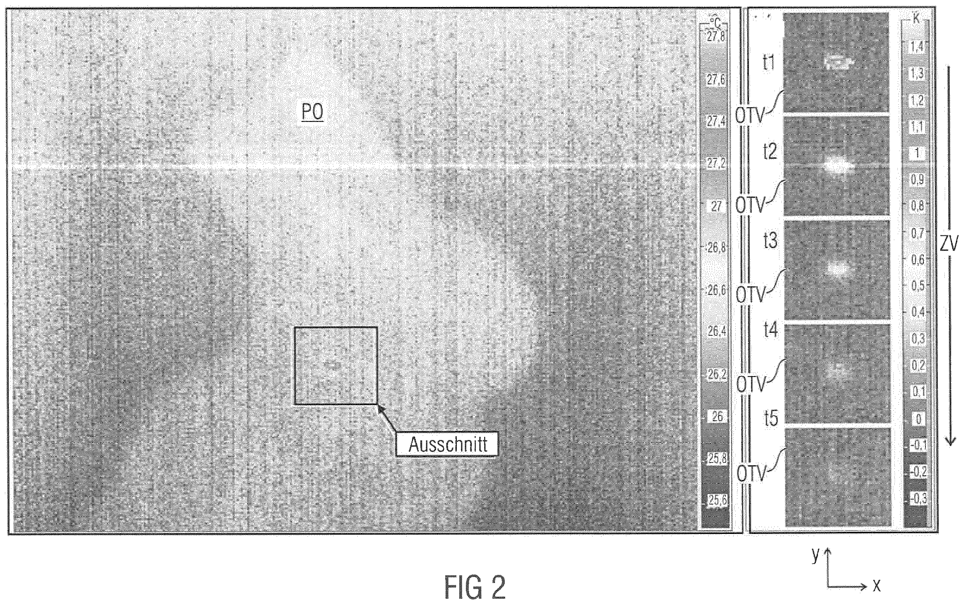

Fig. 2 zeigt ein beispielhaftes Wärmebild eines Prüfobjekts PO sowie einen vergrößerten beispielhaften Zeitverlauf ZV einer örtlichen Temperaturverteilung OTV in Form von zeitlich gestaffelt aufgenommenen Wärmebildern im Bereich eines zu vermessenden Oberflächenbereichs VO an dem Prüfobjekt PO.

Die thermische Sensoreinrichtung 3 kann dazu dienen, die Oberflächentemperatur des Messobjekts PO in der Region um den durch die Strahlung erwärmten Punkt BO über die Zeit zu erfassen. In Fig. 2 ist dieser Sachverhalt mit dem punktuell erwärmten Messobjekt PO links dargestellt.

Der Zeitverlauf ZV der örtlichen Temperaturverteilung OTV ist dabei durch die zu den Zeitpunkten t1, t2, t3, t4 und t5 zweidimensional aufgenommenen Wärmebilder abgebildet, welche auf der rechten Seite der Fig. 2 dargestellt sind.

Insbesondere bei sehr kleinen Temperaturerhöhungen in Bezug auf die thermische Auflösung der thermischen Sensoreinrichtung 3, besteht das Problem, dass die gemessene Wärmeverteilung von ihrem Rauschen überlagert ist. Dieser Sachverhalt ist in Fig. 2 anhand der farblich codierten Temperaturverteilung sehr gut zu erkennen.

Anstelle eines Punktes BO können z.B. mittels Optik (diffraktives optisches Element - DOE) mehrere Punkte BO gleichzeitig oder durch einen Scanner nacheinander auf das Messobjekt abgebildet werden. Die thermische Erfassung muss dann für jede Abbildung einzeln oder in einem hinreichend kleinen Zeitabstand zur Wärmeeinwirkung erfolgen.

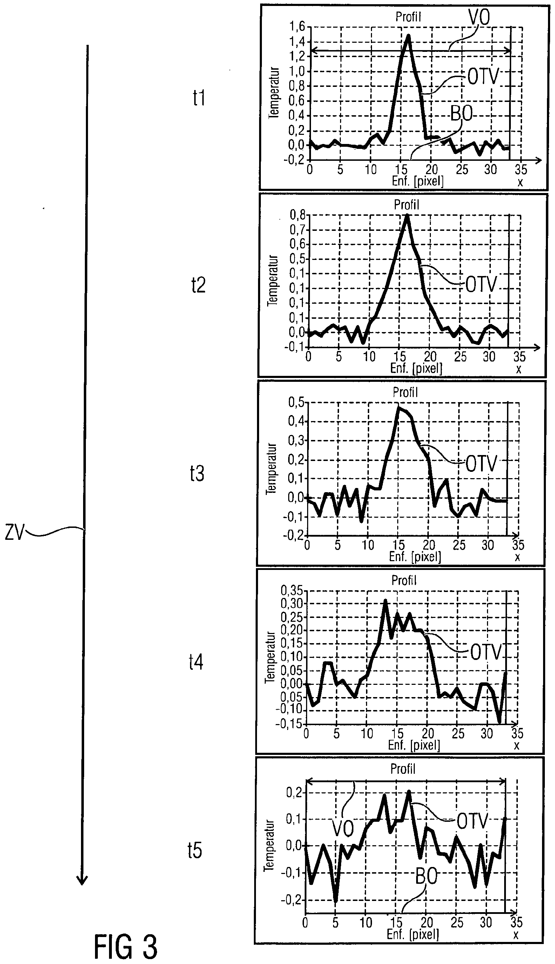

Fig. 3 zeigt den beispielhaften Zeitverlauf ZV der örtlichen Temperaturverteilung OTV in Form von zeitlich gestaffelten Ort-Temperatur-Kurven OTV. Die Ort-Temperatur-Kurven OTV geben dabei die Temperaturverteilungen zu den Zeitpunkten t1, t2, t3, t4 und t5 eindimensional, nämlich in x-Richtung an.

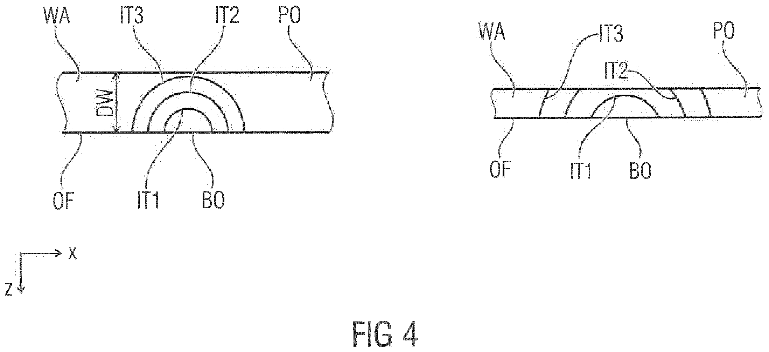

Fig. 4 zeigt links eine beispielhafte Temperaturverteilung in einer geschnittenen Aufsicht auf ein Prüfobjekt PO mit einer großen Dicke DW der Wandung WA sowie rechts eine beispielhafte Temperaturverteilung in einer geschnittenen Aufsicht auf ein Prüfobjekt PO mit einer geringeren Dicke DW der Wandung WA. Die Temperaturverteilungen sind jeweils durch Isothermen IT1, IT2, IT3, also Linien gleicher Temperatur, dargestellt.

Aus Fig. 4 ist klar erkennbar, dass, ceteris paribus, eine Verringerung der Dicke DW der Wandung WA dazu führt, dass sich die Isothermen in x-Richtung, also parallel zur Oberfläche OF, über einen größeren Bereich erstrecken.

Durch Wärmeleitung breitet sich die Wärmeenergie im Messobjekt aus, was durch eine sich ändernde Wärmeverteilung an der Oberfläche OF erfasst werden kann. Dies ist in Fig. 2 rechts mit dem zeitlichen Verlauf der Temperaturverteilung OTV im Bereich einiger Sekunden dargestellt. Für dicke und dünne Wandlungen WA sind die zwei Ausbreitungsvarianten in Fig. 4 dargestellt. So erfolgt die Ausbreitung bei einem in Tiefenrichtung unendlich ausgestreckten Volumen hoher Wärmeleitfähigkeit in Tiefenrichtung, also in z-Richtung, und in Querrichtung, also in x-Richtung, und bei einem flachen Volumen im Wesentlichen in Querrichtung. Anhand des zeitlichen Verlaufs bzw. der Wärmeverteilung zu bestimmten definierten Zeitpunkten kann die Dicke DW der Wandlungen WA des Messobjekts PO bzw. die Form des Körpers mit konstant hoher Wärmeleitung ermittelt werden.

Die verschiedenen Einflussfaktoren Temperatur des Messobjekts und Umgebungstemperatur, Luftbewegung bzw. Strahlung der Umgebung sowie spezifische Wärmekapazität und Wärmeleitfähigkeit des Messobjekts bestimmen dabei den Zusammenhang zwischen initialem Wärmeeintrag, Temperatur zu Beginn der Messung, Ausbreitung der Wärme im Messobjekt PO und damit den an der Oberfläche OF feststellbaren Zeitverlauf der örtlichen Temperaturverteilung OTV. Der Emissionsgrad definiert den Zusammenhang zwischen tatsächlicher Oberflächentemperatur und festgestellter Strahlung im Wellenlängenbereich der Wärmebildkamera.

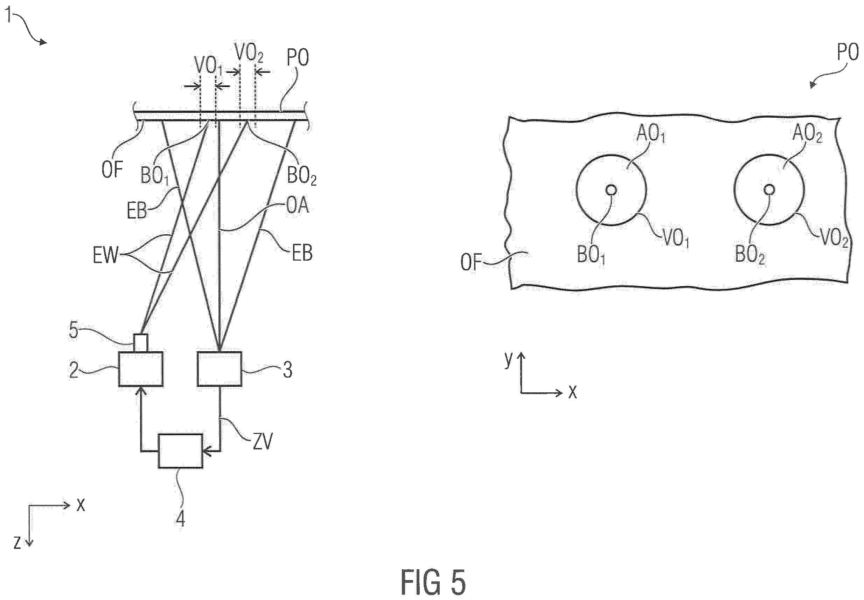

Fig. 5 zeigt eine schematische Aufsicht eines zweiten Ausführungsbeispiels einer erfindungsgemäßen thermographischen Untersuchungseinrichtung 1 sowie eine zugehörige schematische Vorderansicht eines Prüfobjekts PO in einer vergrößerten Darstellung.

Gemäß einer besonders vorteilhaften Weiterbildung der Erfindung ist die Erwärmungseinrichtung 2 zum gleichzeitigen oder zeitlich überlappenden Aufbringen von Wärmeenergie auf mehrere zu beheizende Oberflächenbereiche BO₁, BO₂ ausgebildet, wobei die thermische Sensoreinrichtung 3 jeweils zur gleichzeitigen oder zeitlich überlappenden Erfassung der dem Aufbringen von Wärmeenergie nachfolgenden Zeitverläufe der örtlichen Temperaturverteilungen auf mehreren zu vermessenden Oberflächenbereichen VO₁, VO₂ des Prüfobjekts PO ausgebildet ist, wobei die zu vermessenden Oberflächenbereiche VO₁, VO₂ jeweils einen der zu beheizenden Oberflächenbereiche BO₁, BO₂ sowie einen dem jeweiligen zu beheizenden Oberflächenbereich BO₁, BO₂ benachbarten äußeren Oberflächenbereich AO₁, AO₂ umfassen; und wobei die Auswerteeinrichtung 4 zur gleichzeitigen oder zeitlich überlappenden Auswertung der Zeitverläufe der örtlichen Temperaturverteilungen ausgebildet ist, um so wenigstens einen Parameter DW der oberflächennahen Struktur an mehreren zu vermessenden Oberflächenbereichen VO₁, VO₂ gleichzeitig oder zeitlich überlappend zu erfassen.

Unter "gleichzeitig" wird hierbei verstanden, dass die jeweiligen Ereignisse zum gleichen Zeitpunkt beginnen und zum gleichen Zeitpunkt enden. Weiterhin wird unter "zeitlich überlappend" verstanden, dass der Beginn eines späteren Ereignisses zwischen dem Beginn und dem Ende des früheren Ereignisses liegt.

Im Rahmen dieser Weiterbildung der Erfindung ist es möglich eine Vielzahl von Oberflächenbereichen VO₁, VO₂ in kurzer Zeit zu untersuchen.

Falls die Erwärmungseinrichtung 2 zur Aussendung von elektromagnetischen Wellen EW ausgebildet ist, kann die Erwärmungseinrichtung 2 eine Optik 5 aufweisen, welche die erzeugten elektromagnetischen Wellen EW auf mehrere zu beheizenden Oberflächenbereich BO₁, BO₂ fokussiert.

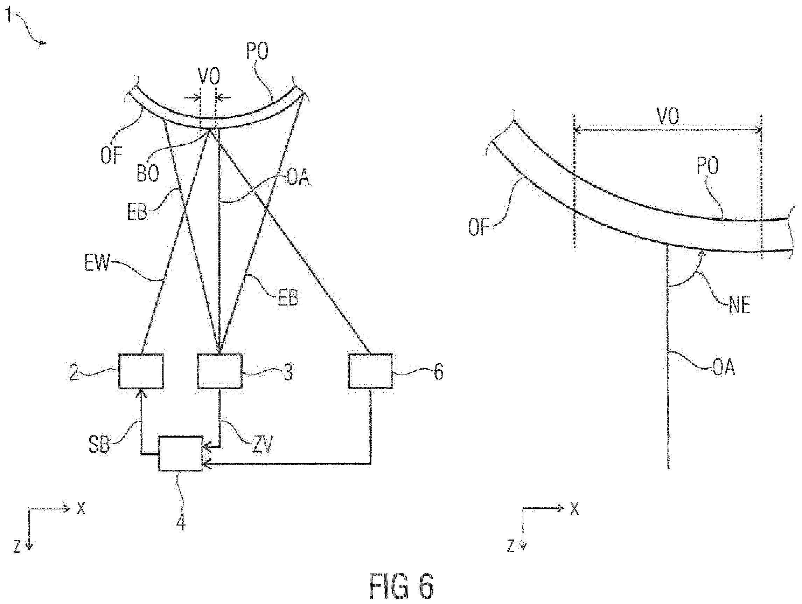

Fig. 6 zeigt eine schematische Aufsicht eines dritten Ausführungsbeispiels einer erfindungsgemäßen thermographischen Untersuchungseinrichtung 1 sowie eine zugehörige schematische Vorderansicht eines Prüfobjekts PO in einer vergrößerten Darstellung. In Figur 6 sind die Erwärmungsvorrichtung 2, die thermische Sensoreinrichtung 3 und die Neigungserfassungseinrichtung 6 einer Ebene dargestellt. Dies erfolgt lediglich aus zeichnerischen Gründen. In der Realität ist es günstiger, wenn die Erwärmungsvorrichtung 2 und die thermische Sensoreinrichtung 3 eine erste Ebene sowie thermische Sensoreinrichtung 3 und die Neigungserfassungseinrichtung 6 eine 2. Ebene auf spannen, welche beispielsweise rechtwinklig zueinander angeordnet sind.

Gemäß einer vorteilhaften Weiterbildung der Erfindung ist die Auswerteeinrichtung 4 zur Berücksichtigung eines örtlichen Verlaufs einer Neigung NE des zu vermessenden Oberflächenbereichs VO in Bezug auf eine optische Achse OA der thermischen Sensoreinrichtung 3 bei der Auswertung des Zeitverlaufs der örtlichen Temperaturverteilung ausgebildet.

Für eine genaue Auswertung des Wärmestroms im Prüfobjekt PO ist es erforderlich, die Temperaturverteilung längs der Oberfläche OF zu ermitteln. Aufgrund von perspektivischen Verzerrungen, beispielsweise bedingt durch die optischen Eigenschaften der thermischen Sensoreinrichtung 3, ist es aber nicht möglich, die Temperaturverteilung unmittelbar längs der Oberfläche zu ermitteln. Dies gilt insbesondere wenn die Blickrichtung, also die optische Achse OA, der thermischen Sensoreinrichtung 3 nicht senkrecht auf den jeweiligen Messpunkt fällt, was insbesondere bei einer ebenen Oberfläche OF des Prüfobjekts PO, welche gegenüber einer zur optischen Achse OA senkrecht angeordneten Ebene geneigt ist oder bei einer gekrümmten Oberfläche OF des Prüfobjekts PO, welche ja zumindest bereichsweise gegenüber einer zur optischen Achse OA senkrecht angeordneten Ebene geneigt ist, der Fall ist.

Weiterhin ergibt sich bei geneigten und insbesondere bei gekrümmten Oberflächen OF das Problem, dass Größe und Form des zu beheizenden Oberflächenbereichs BO von der Neigung bzw. der Krümmung der Oberflächen OF abhängen können, so dass auch die flächenspezifische Wärmemenge variiert.

Durch die Berücksichtigung des örtlichen Verlaufs der Neigung NE des zu vermessenden Oberflächenbereichs VO in Bezug auf die optische Achse OA der thermischen Sensoreinrichtung 3 können Fehler aufgrund einer perspektivischen Verzerrung ebenso wie Fehler aufgrund einer Variation der flächenspezifischen Wärmemenge kompensiert werden.

Gemäß der Erfindung ist die Erwärmungsvorrichtung 2 so ausgebildet, dass das Aufbringen von Wärmeenergie auf den zu beheizenden Oberflächenbereich BO des Prüfobjekts PO in Abhängigkeit von dem örtlichen Verlauf der Neigung NE erfolgt.

Hierdurch ist es möglich, den Eintrag der Wärmemenge in Abhängigkeit von dem örtlichen Verlaufs der Neigung NE zu steuern oder zu regeln. So kann beispielsweise die Leistung der Erwärmungsvorrichtung 2 oder die Wirkdauer der Erwärmungsvorrichtung 2 gesteuert oder geregelt werden. Hierdurch kann einerseits eine lokale Überhitzung des Prüfobjekts PO, wenn der zu beheizenden Oberflächenbereich BO nahezu senkrecht zur Wärmeeinfallsrichtung steht, als auch eine unauswertbar kleine Erhitzung des Prüfobjekts PO, wenn der zu beheizende Oberflächenbereich OB nahezu parallel zur Wärmeeinfallsrichtung steht, vermieden werden.

Gemäß einer vorteilhaften Weiterbildung der Erfindung weist die thermographische Untersuchungseinrichtung 1 eine Neigungserfassungseinrichtung 6 zur Erfassung des örtlichen Verlaufs der Neigung NE auf. Beispielsweise kann die Neigungserfassungseinrichtung 6 eine Laserlichtschnitt-Kamera 6 umfassen. Mittels der optischen Laserlichtschnitt-Kamera 6 kann durch Triangulation anhand eines bekannten Strahlengangs der Erwärmungseinrichtung 2 die Position des Auftreffpunktes auf dem Prüfobjekt PO sowie die Krümmung und die Orientierung der Oberfläche OF in einfacher Weise ermittelt werden. Die Laserlichtschnitt-Kamera 6 kann auf ein Spektrum der Erwärmungseinrichtung 2 abgestimmt sein.

Dazu kann die Position des zu beheizenden Oberflächenbereich verwendet werden, um dessen genaue Lokalisierung zu ermöglichen und, falls erforderlich, zur Erhöhung der flächigen Abdeckung und damit Auflösung eine zusätzliche Linie mit dem zur Erwärmung verwendeten oder einem separaten Laser abgebildet werden. Anders ausgedrückt, kann der örtliche Verlauf der Neigung NE zunächst separat vom Erwärmungsprozess mit hoher Auflösung erfasst werden, wobei dann der zu beheizenden Oberflächenbereich BO als Referenz dafür dienen kann, um den örtlichen Verlauf der Neigung NE und die örtliche Temperaturverteilung OTV zur Deckung zu bringen.

Auf diese Weise können auch Prüfobjekte untersucht werden, welche eine komplexe äußere Form aufweisen, ohne dass diese explizit bekannt ist.

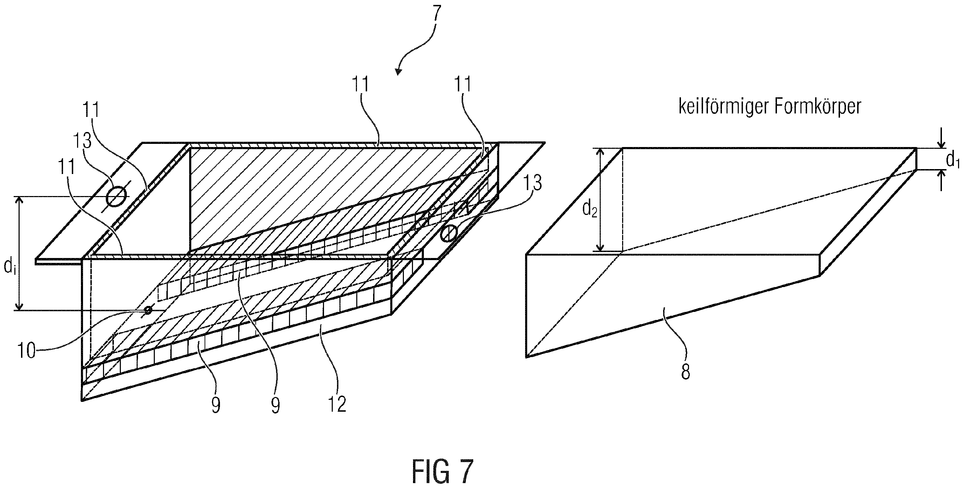

Fig. 7 zeigt eine schematische dreidimensionale Darstellung einer Gussform zur Herstellung eines Kalibrierkörpers sowie eine schematische dreidimensionale Darstellung eines mit der Gussform hergestellten Kalibrierkörper.

Gemäß einer vorteilhaften Weiterbildung der Erfindung umfasst die thermographische Untersuchungseinrichtung 1 eine Gussform 7 zur Herstellung eines Kalibrierkörpers 8, insbesondere eines keilförmigen Kalibrierkörpers 8. Der Wärmeeintrag mittels Bestrahlung ist von spektralen und örtlichen Verteilung der Leistung und der von der Quelle bestrahlten Fläche sowie dem Reflexions- bzw. Absorptionskoeffizienten der Oberfläche abhängig. Aufgrund der Vielzahl Einflussfaktoren und deren z.T. veränderlichen oder nicht einfach feststellbaren Größe ist es erforderlich, vor der Untersuchung der oberflächennahen Struktur eine Kalibrierung der Anordnung 1 vorteilhaft. Dazu kann ein Kalibrierkörper 8 verwendet werden, der eine Keilform mit bekannten Dicken d1 und d2 zwischen dem unteren und oberen festzustellenden Wert aufweist und aus dem gleichen Material wie das Messobjekt PO gefertigt wurde ist. Die vorgesehene Gussform 7 ermöglicht es, mit dem jeweiligen Prüfobjekt PO korrespondierende Kalibrierkörper 8 in einfacher Weise herzustellen.

Die Gussform 7 weist einen Boden 9 auf, der einen Schlitz 10 umfasst der sich entlang derjenigen Richtung erstreckt, in der sich die die Dicke d des Kalibrierkörpers 8 verändert. Weiterhin weist die Gussform 7 vier seitliche Wände 11 sowie ein Verschluss 12 für den Schlitz 10 auf. Oben ist die Gussform 7 offen, so dass sie mit dem gießbaren Werkstoff gefüllt werden kann, wenn der Schlitz 10 mit dem Verschluss 12 verschlossen ist. Wenn sich der gießbare Werkstoff verfestigt hat, kann der Verschluss 12 entfernt werden, so dass die Unterseite des Kalibrierkörpers 8 an der Unterseite im Bereich des Schlitzes 10 frei ist. Nun kann der sich noch in der Gussform 7 befindliche Kalibrierungskörper 8 zur Kalibrierung verwendet werden, da die Temperaturausbreitung im Kalibrierkörper 8 im Bereich der Schlitzes 10 praktisch nicht von der Gussform 7 beeinflusst wird. Die Markierungen 13 dienen dabei während der Kalibrierung zur Positionierung des Kalibrierkörpers 8.

Die in Fig. 7 dargestellte Gussform 7 ist für die Herstellung eines Kalibrierkörpers 8 aus einem gießbaren Werkstoff vorgesehen. Die Form 7 ist so ausgeführt, dass der Verschluss 12 entnehmbar ist, so dass der Kalibrierkörper 8 über einem Schlitz 10 frei ist. Anhand von Markierungen 13 können von außen die Position der Mitte des Schlitzes 10 und die Dicke des Kalibrierkörpers 8 entlang der Verbindungsgeraden zwischen beiden Markierungen 13 abgelesen und in die Kalibrierung einbezogen werden. Zur Feststellung der optischen Parameter wird der Kalibrierkörper 8 um eine geeignete Rotationsachse gedreht. Dadurch ist es möglich, den Einfluss der Oberflächeneigenschaften auf den Messvorgang zu ermitteln.

### Bezugszeichen:

- 1: Thermographische Untersuchungseinrichtung
- 2: Erwärmungsvorrichtung
- 3: thermische Sensoreinrichtung
- 4: Auswerteeinrichtung
- 5: Strahlungsteiler
- 6: Neigungserfassungseinrichtung
- 7: Gussform
- 8: Kalibrierkörper
- 9: Boden
- 10: Schlitz
- 11: seitliche Wände
- 12: Verschluss
- 13: Markierungen

- PO: Prüfobjekt
- OF: Oberfläche
- BO: zu beheizender Oberflächenbereich
- VO: zu vermessender Oberflächenbereich
- AO: äußerer zu vermessender Oberflächenbereich
- DW: Dicke einer Wandung des Prüfobjekts
- EB: Erfassungsbereich
- OA: optische Achse
- WA: Wandung
- EW: elektromagnetische Wellen

- ZV: Zeitverlauf der örtlichen Temperaturverteilung
- OTV: örtliche Temperaturverteilung

- d: Dicke des Kalibrierungskörpers

### Quellen:

[1] US 2004/0076216 A1
[2] US 2008/0137105 A1
[3] GB 2 235 604 A
[4] US 2008/0291465 A1
[5] US 2008/0307886 A1
[6] US 6,387,715 B1
[7] Infrared thermography for inspecting the adhesion integrity of plastic welded joints, M Omar, M Hassan, K Donohue, K Saito, R Alloo - NDT & E International, Volume 39, Issue 1, Pages 1-7, 2006
[8] EP 0 347 641 A2

## Patentansprüche

1. Thermographische Untersuchungseinrichtung zur zerstörungsfreien Untersuchung einer oberflächennahen Struktur an einem Prüfobjekt (PO), umfassend
eine Erwärmungsvorrichtung (2) zum Aufbringen von Wärmeenergie auf einen zu beheizenden Oberflächenbereich (BO) des Prüfobjekts (PO);
eine thermische Sensoreinrichtung (3) zur Erfassung eines dem Aufbringen von Wärmeenergie nachfolgenden Zeitverlaufs (ZV) einer örtlichen Temperaturverteilung (OTV) auf einem zu vermessenden Oberflächenbereich (VO) des Prüfobjekts (PO), wobei der zu vermessende Oberflächenbereich (VO) den zu beheizenden Oberflächenbereich (BO) sowie einen dem zu beheizenden Oberflächenbereich (BO) benachbarten äußeren zu vermessenden Oberflächenbereich (AO) umfasst; und
eine Auswerteeinrichtung (4) zur Auswertung des Zeitverlaufs (ZV) der örtlichen Temperaturverteilung (OTV), um so wenigstens einen Parameter (DW) der oberflächennahen Struktur am zu vermessenden Oberflächenbereich (VO) zu erfassen;
**gekennzeichnet dadurch, dass**
die Erwärmungsvorrichtung (2) so ausgebildet ist, das Aufbringen von Wärmeenergie auf den zu beheizenden Oberflächenbereich (BO) des Prüfobjekts (PO) in Abhängigkeit von einem örtlichen Verlauf einer Neigung (NE) des zu vermessenden Oberflächenbereichs (VO) in Bezug auf eine optische Achse (AO) der thermischen Sensoreinrichtung (3) zu steuern oder zu regeln.

2. Thermographische Untersuchungseinrichtung nach vorstehendem Anspruch, wobei der Parameter (DW) eine Dicke (DW) einer Wandung (WA) des Prüfobjekts (PO) ist.

3. Thermographische Untersuchungseinrichtung nach einem der vorstehenden Ansprüche, wobei der Parameter (DW) eine Dichte einer Wandung (WA) des Prüfobjekts (PO) ist.

4. Thermographische Untersuchungseinrichtung nach einem der vorstehenden Ansprüche, wobei der zu beheizenden Oberflächenbereich (BO) punktförmig, linienförmig in Form einer offenen Kurve, linienförmig in Form einer geschlossenen Kurve, kreisförmig oder elliptisch ausgebildet ist.

5. Thermographische Untersuchungseinrichtung nach einem der vorstehenden Ansprüche, wobei der zu beheizenden Oberflächenbereich (BO) wenigstens zwei beanstandete zu beheizenden Teiloberflächenbereiche aufweist, welche Teil desselben zu vermessenden Oberflächenbereichs (VO) sind.

6. Thermographische Untersuchungseinrichtung nach einem der vorstehenden Ansprüche, wobei die Erwärmungseinrichtung (2) zum Aufbringen von Wärmeenergie auf denen zu beheizenden Oberflächenbereich (BO) mittels elektromagnetischer Wellen (EW) ausgebildet ist.

7. Thermographische Untersuchungseinrichtung nach einem der vorstehenden Ansprüche, wobei die Erwärmungseinrichtung (2) zum Aufbringen von Wärmeenergie auf den zu beheizenden Oberflächenbereich (BO) mittels mechanischer Anregung ausgebildet ist.

8. Thermographische Untersuchungseinrichtung nach einem der vorstehenden Ansprüche, wobei die Erwärmungseinrichtung (2) zum Aufbringen von Wärmeenergie auf den zu beheizenden Oberflächenbereich (BO) mittels Wärmeleitung ausgebildet ist.

9. Thermographische Untersuchungseinrichtung nach einem der vorstehenden Ansprüche, wobei die Erwärmungseinrichtung zum Aufbringen von Wärmeenergie auf den zu beheizenden Oberflächenbereich (BO) mittels Erzeugung eines elektrischen Stroms an dem zu beheizenden Oberflächenbereich (BO) ausgebildet ist.

10. Thermographische Untersuchungseinrichtung nach einem der vorstehenden Ansprüche, wobei die thermische Sensoreinrichtung (3) einen eindimensionalen Sensor, beispielsweise einen digitalen Zeilensensor, aufweist.

11. Thermographische Untersuchungseinrichtung nach einem der vorstehenden Ansprüche, wobei die thermische Sensoreinrichtung (3) einen zweidimensionalen Sensor (3), beispielsweise einen digitalen Bildsensor (3), aufweist.

12. Thermographische Untersuchungseinrichtung nach einem der vorstehenden Ansprüche, wobei die Erwärmungseinrichtung (2) zum gleichzeitigen oder zeitlich überlappenden Aufbringen von Wärmeenergie auf mehrere zu beheizende Oberflächenbereiche (BO₁, BO₂) ausgebildet ist, wobei die thermische Sensoreinrichtung (3) jeweils zur gleichzeitigen oder zeitlich überlappenden Erfassung der dem Aufbringen von Wärmeenergie nachfolgenden Zeitverläufe (ZV) der örtlichen Temperaturverteilungen (OTV) auf mehreren zu vermessenden Oberflächenbereichen (VO₁, VO₂) des Prüfobjekts (PO) ausgebildet ist, wobei die zu vermessenden Oberflächenbereiche (VO₁, VO₂) jeweils einen der zu beheizenden Oberflächenbereiche (BO₁, BO₂) sowie einen dem jeweiligen zu beheizenden Oberflächenbereich (BO₁, BO₂) benachbarten äußeren Oberflächenbereich (AO₁, AO₂) umfassen; und wobei die Auswerteeinrichtung (4) zur gleichzeitigen oder zeitlich überlappenden Auswertung der Zeitverläufe (ZV) der örtlichen Temperaturverteilungen (OTV) ausgebildet ist, um so wenigstens einen Parameter (DW) der oberflächennahen Struktur an mehreren zu vermessenden Oberflächenbereichen (VO₁, VO₂) gleichzeitig oder zeitlich überlappend zu erfassen.

13. Thermographische Untersuchungseinrichtung nach einem der vorstehenden Ansprüche, wobei die Auswerteeinrichtung (4) zur Berücksichtigung eines örtlichen Verlaufs der Neigung (NE) des zu vermessenden Oberflächenbereichs (VO) in Bezug auf eine optische Achse (AO) der thermischen Sensoreinrichtung (3) bei der Auswertung des Zeitverlaufs (ZV) der örtlichen Temperaturverteilung (OTV) ausgebildet ist.

14. Thermographische Untersuchungseinrichtung nach einem der vorstehendem Ansprüche, wobei die thermographische Untersuchungseinrichtung (1) eine Neigungserfassungseinrichtung (6) zur Erfassung des örtlichen Verlaufs der Neigung (NE) aufweist.

15. Thermographische Untersuchungseinrichtung nach einem der vorstehenden Ansprüche, wobei die thermographische Untersuchungseinrichtung (1) eine Gussform (7) zur Herstellung eines Kalibrierkörpers (8), insbesondere eines keilförmigen Kalibrierkörpers (8), umfasst.

16. Verfahren zur zerstörungsfreien Untersuchung einer oberflächennahen Struktur an einem Prüfobjekt (PO), umfassend die Schritte
Aufbringen von Wärmeenergie auf einen zu beheizenden Oberflächenbereich (BO) des Prüfobjekts (PO) mittels einer Erwärmungseinrichtung (2);
Erfassung eines dem Aufbringen von Wärmeenergie nachfolgenden Zeitverlaufs (ZV) einer örtlichen Temperaturverteilung (OTV) auf einem zu vermessenden Oberflächenbereich (VO) des Prüfobjekts (PO) mittels einer thermischen Sensoreinrichtung (3), wobei der zu vermessende Oberflächenbereich (VO) den zu beheizenden Oberflächenbereich (BO) sowie einen dem zu beheizenden Oberflächenbereich (BO) benachbarten äußeren Oberflächenbereich (AO) umfasst; und
Auswertung des Zeitverlaufs (ZV) der örtlichen Temperaturverteilung (OTV) mittels einer Auswerteeinrichtung (4), um so wenigstens einen Parameter (DW) der oberflächennahen Struktur am zu vermessenden Oberflächenbereich (VO) zu erfassen;
**dadurch gekennzeichnet,**
**dass** das Aufbringen von Wärmeenergie auf den zu beheizenden Oberflächenbereich (BO) des Prüfobjekts (PO) mittels der Erwärmungsvorrichtung (2) in Abhängigkeit von dem örtlichen Verlauf einer Neigung (NE) des zu vermessenden Oberflächenbereichs (VO) in Bezug auf eine optische Achse (AO) der thermischen Sensoreinrichtung (3) gesteuert oder geregelt wird.

## Claims

1. Thermographic examination means for non-destructive examination of a near-surface structure at a test object (PO), including
a heating device (2) for applying heat energy to a surface region to be heated (BO) of the test object (PO);
a thermal sensor means (3) for detecting a time profile (ZV), following the application of heat energy, of a spatial temperature distribution (OTV) on a surface region to be measured (VO) of the test object (PO), the surface region to be measured (VO) including the surface region to be heated (BO) as well as an outer surface region to be measured (AO) which is adjacent to the surface region to be heated (BO); and
an evaluation means (4) for evaluating the time profile (ZV) of the spatial temperature distribution (OTV) so as to detect at least one parameter (DW) of the near-surface structure at the surface region to be measured (VO);
**characterized in that**
the heating device (2) is configured to control or to regulate the application of heat energy to the surface region to be heated (BO) of the test object (PO) as a function of the spatial profile of the inclination (NE) of the surface region to be measured (VO) with regard to an optical axis (AO) of the thermal sensor means (3).

2. Thermographic examination means as claimed in the previous claim, wherein the parameter (DW) is a thickness (DW) of a wall (WA) of the test object (PO).

3. Thermographic examination means as claimed in any of the previous claims, wherein the parameter (DW) is a density of a wall (WA) of the test object (PO).

4. Thermographic examination means as claimed in any of the previous claims, wherein the surface region to be heated (BO) is configured to be point-shaped, to be linear in the form of an open curve, to be linear in the form of a closed curve, to be circular or elliptical.

5. Thermographic examination means as claimed in any of the previous claims, wherein the surface region to be heated (BO) comprises at least two spaced-apart surface subregions to be heated, which are parts of the same surface region to be measured (VO).

6. Thermographic examination means as claimed in any of the previous claims, wherein the heating means (2) is configured to apply heat energy to the surface region to be heated (BO) by means of electromagnetic waves (EW).

7. Thermographic examination means as claimed in any of the previous claims, wherein the heating means (2) is configured to apply heat energy to the surface region to be heated (BO) by means of mechanical excitation.

8. Thermographic examination means as claimed in any of the previous claims, wherein the heating means (2) is configured to apply heat energy to the surface region to be heated (BO) by means of heat conduction.

9. Thermographic examination means as claimed in any of the previous claims, wherein the heating means is configured to apply heat energy to the surface region to be heated (BO) by generating an electrical current at the surface region to be heated (BO).

10. Thermographic examination means as claimed in any of the previous claims, wherein the thermal sensor means (3) comprises a one-dimensional sensor, for example a digital line sensor.

11. Thermographic examination means as claimed in any of the previous claims, wherein the thermal sensor means (3) comprises a two-dimensional sensor (3), for example a digital image sensor (3).

12. Thermographic examination means as claimed in any of the previous claims, wherein the heating means (2) is configured to apply heat energy in a simultaneous or time-overlapping manner to several surface regions to be heated (BO₁, BO₂), the thermal sensor means (3) being configured to detect, in a simultaneous or time-overlapping manner, those time profiles (ZV) of the spatial temperature distributions (OTV) which follow the application of heat energy, on several surface regions of the test object (PO) that are to be measured (VO₁, VO₂), the surface regions to be measured (VO₁, VO₂) each including one of the surface regions to be heated (BO₁, BO₂) as well as one outer surface region (AO₁, AO₂) adjacent to the respective surface region to be heated (BO₁, BO₂); and wherein the evaluation means (4) is configured to evaluate the time profiles (ZV) of the spatial temperature distributions (OTV) in a simultaneously or time-overlapping manner so as to detect in a simultaneously or time-overlapping manner at least one parameter (DW) of the near-surface structure at several surface regions to be measured (VO₁, VO₂).

13. Thermographic examination means as claimed in any of the previous claims, wherein the evaluation means (4) is configured to take into account a spatial profile of the inclination (NE) of the surface region to be measured (VO) with regard to an optical axis (AO) of the thermal sensor means (3) in the evaluation of the time profile (ZV) of the spatial temperature distribution (OTV).

14. Thermographic examination means as claimed in any of the previous claims, the thermographic examination means (1) comprising an inclination detecting means (6) for detecting the spatial profile of the inclination (NE).

15. Thermographic examination means as claimed in any of the previous claims, the thermographic examination means (1) including a casting mold (7) for producing a calibration body (8), in particular a wedge-shaped calibration body (8).

16. Method for non-destructive examination of a near-surface structure at a test object (PO), comprising the steps of
applying heat energy to a surface region to be heated (BO) of the test object (PO) by means of a heating means (2);
detecting a time profile (ZV), following the application of heat energy, of a spatial temperature distribution (OTV) on a surface region to be measured (VO) at the test object (PO) by means of a thermal sensor means (3), the surface region to be measured (VO) including the surface region to be heated (BO) as well as an outer surface region (AO) which is adjacent to the surface region to be heated (BO); and
evaluating the time profile (ZV) of the spatial temperature distribution (OTV) by means of an evaluation means (4) so as to detect at least one parameter (DW) of the near-surface structure at the surface region to be measured (VO);
**characterized in that**
applying heat energy to the surface region to be heated (BO) of the test object (PO) by means of the heating device (2) is controlled or regulated as a function of the spatial profile of the inclination (NE) of the surface region to be measured (VO) with regard to an optical axis (AO) of the thermal sensor means (3).

## Revendications

1. Installation d'inspection thermographique pour l'inspection non destructive d'une structure proche de la surface sur un objet d'essai (PO), comportant
un dispositif de chauffage (2) destiné à appliquer de l'énergie thermique à une zone de surface à chauffer (BO) de l'objet d'essai (PO);
un moyen capteur thermique (3) destiné à détecter une évolution dans le temps (ZV) d'une distribution de température locale (OTV) suivant l'application d'énergie thermique à une zone de surface à mesurer (VO) de l'objet d'essai (PO), où la zone de surface à mesurer (VO) comporte la zone de surface à chauffer (BO) ainsi qu'une zone de surface à mesurer extérieure (AO) adjacente à la surface à chauffer (BO); et
un moyen d'évaluation (4) destiné à évaluer l'évolution dans le temps (ZV) de la distribution de température locale (OTV) pour détecter ainsi au moins un paramètre (DW) de la structure proche de la surface sur la zone de surface à mesurer (VO);
**caractérisé par le fait que**
le dispositif de chauffage (2) est conçu pour commander ou pour réguler l'application de l'énergie thermique à la zone de surface à chauffer (BO) de l'objet d'essai (PO) en fonction d'une évolution locale d'une inclinaison (NE) de la zone de surface à mesurer (VO) par rapport à un axe optique (AO) du moyen capteur thermique (3).

2. Installation d'inspection thermographique selon la revendication précédente, dans lequel le paramètre (DW) est une épaisseur (DW) d'une paroi (WA) de l'objet d'essai (PO).

3. Installation d'inspection thermographique selon l'une des revendications précédentes, dans lequel le paramètre (DW) est une densité d'une paroi (WA) de l'objet d'essai (PO).

4. Installation d'inspection thermographique selon l'une des revendications précédentes, dans lequel la zone de surface à chauffer (BO) est réalisée ponctuelle, linéaire en forme de courbe ouverte, linéaire en forme de courbe fermée, circulaire ou elliptique.

5. Installation d'inspection thermographique selon l'une des revendications précédentes, dans lequel la zone de surface à chauffer (BO) présente au moins deux zones de surface partielles à chauffer distantes l'une de l'autre qui font partie de la même zone de surface à mesurer (VO).

6. Installation d'inspection thermographique selon l'une des revendications précédentes, dans lequel le dispositif de chauffage (2) est conçu pour appliquer de l'énergie thermique à la zone de surface à chauffer (BO) au moyen d'ondes électromagnétiques (EW).

7. Installation d'inspection thermographique selon l'une des revendications précédentes, dans lequel le dispositif de chauffage (2) est conçu pour appliquer de l'énergie thermique à la zone de surface à chauffer (BO) au moyen d'une excitation mécanique.

8. Installation d'inspection thermographique selon l'une des revendications précédentes, dans lequel le dispositif de chauffage (2) est conçu pour appliquer de l'énergie thermique à la zone de surface à chauffer (BO) au moyen de conduction thermique.

9. Installation d'inspection thermographique selon l'une des revendications précédentes, dans lequel le dispositif de chauffage est conçu pour appliquer de l'énergie thermique à la zone de surface à chauffer (BO) au moyen de génération d'un courant électrique sur la zone de surface à chauffer (BO).

10. Installation d'inspection thermographique selon l'une des revendications précédentes, dans lequel le moyen capteur thermique (3) présente un capteur unidimensionnel, par exemple un capteur linéaire numérique.

11. Installation d'inspection thermographique selon l'une des revendications précédentes, dans lequel le moyen capteur thermique (3) présente un capteur bidimensionnel (3), par exemple un capteur d'image numérique (3).

12. Installation d'inspection thermographique selon l'une des revendications précédentes, dans lequel le dispositif de chauffage (2) est conçu pour appliquer de manière simultanée ou en chevauchement dans le temps de l'énergie thermique sur plusieurs zones de surface à chauffer (BO₁, BO₂), dans lequel le moyen capteur thermique (3) est chaque fois conçu pour détecter de manière simultanée ou en chevauchement dans le temps les évolutions dans le temps (ZV) des distributions de température locales (OTV) sur plusieurs zones de surface à mesurer (VO₁, VO₂) de l'objet d'essai (PO), dans lequel les zones de surfaces à mesurer (VO₁, VO₂) comportent, chacune, une zone de surface extérieure (AO₁, AO₂) adjacente à la zone de surface à chauffer (BO₁, BO₂) ainsi qu'une zone de surface extérieure (AO₁, AO₂) adjacente à la zone de surface à chauffer (BO₁, BO₂) respective; et dans lequel le moyen d'évaluation (4) est conçu pour évaluer de manière simultanée ou en chevauchement dans le temps les évolutions dans le temps (ZV) des distributions de température locales (OTV) pour déterminer ainsi de manière simultanée ou en chevauchement dans le temps au moins un paramètre (DW) de la structure proche de la surface sur plusieurs zones de surface à mesurer (VO₁, VO₂).

13. Installation d'inspection thermographique selon l'une des revendications précédentes, dans lequel le moyen d'évaluation (4) est conçu pour tenir compte d'une évolution locale de l'inclinaison (NE) de la zone de surface à mesurer (VO) par rapport à un axe optique (AO) du moyen capteur thermique (3) lors de l'évaluation de l'évolution dans le temps (ZV) de la distribution de température locale (OTV).

14. Installation d'inspection thermographique selon l'une des revendications précédentes, dans lequel l'installation d'inspection thermographique (1) présente un moyen de détection d'inclinaison (6) destiné à détecter l'évolution locale de l'inclinaison (NE).

15. Installation d'inspection thermographique selon l'une des revendications précédentes, dans lequel l'installation d'inspection thermographique (1) comporte un moule de coulée (7) destiné à fabriquer un corps de calibrage (8), notamment un corps de calibrage (8) en forme de coin.

16. Procédé d'inspection non destructive d'une structure proche de la surface sur un objet d'essai (PO), comportant les étapes consistant à
appliquer de l'énergie thermique à une zone de surface (BO) à chauffer de l'objet d'essai (PO) au moyen d'un dispositif de chauffage (2);
détecter une évolution dans le temps (ZV) d'une distribution de température locale (OTV) suivant l'application d'énergie thermique à une zone de surface à mesurer (VO) de l'objet d'essai (PO) au moyen d'un moyen capteur thermique (3), où la zone de surface à mesurer (VO) comporte la zone de surface à chauffer (BO) ainsi qu'une zone de surface à mesurer extérieure (AO) adjacente à la surface à chauffer (BO); et
évaluer l'évolution dans le temps (ZV) de la distribution de température locale (OTV) au moyen d'un moyen d'évaluation (4) pour détecter ainsi au moins un paramètre (DW) de la structure proche de la surface sur la zone de surface à mesurer (VO);
**caractérisé par le fait**
**que** l'application d'énergie thermique à la zone de surface à chauffer (BO) de l'objet d'essai (PO) au moyen du dispositif de chauffage (2) est commandée ou régulée en fonction de l'évolution locale d'une inclinaison (NE) de la zone de surface à mesurer (VO) par rapport à un axe optique (AO) du moyen capteur thermique (3).
